# EUROPEAN PATENT APPLICATION

(11) **EP 2 527 178 A2**
(43) Date of publication of application: **28.11.2012**
(21) Application number: 12169509.2
(22) Date of filing: 25.05.2012
(51) Int. Cl.: B60K 6/48, B60W 20/00, B60W 30/19, B60W 10/08, B60W 10/06, B60W 10/11, F16H 61/02

(54) **Control device and control method for vehicle**

(30) Priority: 27.05.2011 JP 2011118962
(71) Applicant: Toyota Jidosha Kabushiki Kaisha, Toyota-shi, Aichi 471-8571 (JP); AISIN SEIKI KABUSHIKI KAISHA, Kariya-shi, Aichi 448-8650 (JP)
(72) Inventor: Harada, Shinya, Kariya-shi, Aichi 448-8650 (JP); Tanaka, Takaaki, Toyota-shi, Aichi 471-8571 (JP)
(74) Representative: Albutt, Anthony John

(57) **Abstract**

A vehicle is configured such that a clutch (12) is provided between an engine (11) and a multi-speed transmission (13), a motor generator (14) is connected to an output shaft (28) of the multi-speed transmission (13) and a battery (26) is connected to the motor generator (14). When a state of charge level of the battery (26) is lower than a predetermined value set in advance, an intended shift line of the multi-speed transmission (13) is corrected toward a higher rotation speed. When the multi-speed transmission (13) shifts gears, the motor generator (14) is allowed to assist the engine (11) such that a rotation speed of the engine (11) is not lower than a self-sustaining rotation speed. When the motor generator (14) is driven, shift control is executed using the corrected shift line.

## Description

### BACKGROUND OF THE INVENTION

### 1. Field of the Invention

The invention relates to a control device and a control method for a vehicle.

### 2. Description of Related Art

There has been suggested a hybrid vehicle that drivably couples an internal combustion engine, a transmission and an electric motor to one another. For example, a control device for a hybrid electric vehicle, described in Japanese Patent Application Publication No. 2007-245805 (JP 2007-245805 A) allows the driving force of an engine and the driving force of an electric motor to be transmitted to drive wheels of the vehicle via an automatic transmission having a plurality of forward gears. When a predetermined state in which it is difficult for an electric motor to output an upper limit torque as an outputtable maximum torque has been detected, the control device controls the automatic transmission using a control map in which the automatic transmission downshifts early in response to a change in the operating state of the vehicle and upshifts late in response to a change in the operating state of the vehicle as compared with a shift map used when the predetermined state is not detected,

The above described existing control device for a hybrid electric vehicle controls the automatic transmission so as to downshift early and upshift late when it is difficult for the electric motor to output the upper limit torque. However, when taking into consideration the timing at which the automatic transmission downshifts and the timing at which the automatic transmission upshifts, although driving force required to drive the vehicle may be ensured, the rotation speed of the engine when the engine is. being driven may decrease more than necessary and the engine may stop.

### SUMMARY OF THE INVENTION

The invention provides a control device and control method for a vehicle, which control an internal combustion engine such that a rotation speed of the internal combustion engine is not lower than a self-sustaining rotation speed of the internal combustion engine, at the time of shifting gears to thereby make it possible to avoid a stop of the internal combustion engine.

A first aspect of the invention relates to a control device for a vehicle that includes: an internal combustion engine; a transmission that is connectable to an output shaft of the internal combustion engine; a clutch that is able to shut off torque transmission between the internal combustion engine and the transmission; an electric motor that is connectable to an output shaft of the transmission; and a secondary battery that is able to supply electric power to the electric motor. The control device includes: shift line correcting means that corrects a shift line of the transmission toward a higher rotation speed when a state of charge of the secondary battery is lower than a predetermined value set in advance; motor assist means that causes the electric motor to assist the internal combustion engine such that a rotation speed of the internal combustion engine is not lower than a self-sustaining rotation speed of the internal combustion engine at the time when the transmission shifts speeds; and shift control means that executes shift control using the shift line corrected by the shift line correcting means when the motor assist means operates.

In the control device, the shift line correcting means may obtain a critical rotation speed on the basis of the rotation speed of the internal combustion engine, a speed ratio of the transmission and the state of charge of the secondary battery, and may set a correction amount of the shift line on the basis of the critical rotation speed.

In the control device, in response to an input shift command, the torque transmission between the internal combustion engine and the transmission may be shut off by the clutch, and the motor assist means and the shift control means may be operated, and the shift control means may determine that the transmission has completed shifting speeds when a current rotation speed of the internal combustion engine becomes equal to the critical rotation speed, and may stop its operation, the torque transmission between the internal combustion engine and the transmission may be allowed by the clutch, and the motor assist means may stop its operation;

With the control device according to the first aspect of the invention, the control device includes: shift line correcting means that corrects a shift line of the transmission toward a higher rotation speed when a state of charge of the secondary battery is lower than a predetermined value set in advance; motor assist means that causes the electric motor to assist the internal combustion engine such that a rotation speed of the internal combustion engine is not lower than a self-sustaining rotation speed of the internal combustion engine at the time when the transmission shifts speeds; and a shift control means that executes shift control using the shift line corrected by the shift line correcting means when the motor assist means operates. Therefore, it is possible to avoid a stop of the internal combustion engine at the time when the transmission shifts speeds.

In addition, a second aspect of the invention relates to a control method for a vehicle. The vehicle includes: an internal combustion engine; a transmission that is connectable to an output shaft of the internal combustion engine; a clutch that is able to shut off torque transmission between the internal combustion engine and the transmission; an electric motor that is connectable to an output shaft of the transmission; and a secondary battery that is able to supply electric power to the electric motor. The control method includes: correcting a shift line of the transmission toward a higher rotation speed when a state of charge of the secondary battery is lower than a predetermined value set in advance; causing the electric motor to assist the internal combustion engine such that a rotation speed of the internal combustion engine is not lower than a self-sustaining rotation speed of the internal combustion engine at the time when the transmission shifts speeds; and when the electric motor is caused to assist the internal combustion engine, executing shift control using the corrected shift line.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic configuration diagram that shows a control device for a vehicle according to an embodiment of the invention;
FIG. 2 is a flow chart that shows shift control process executed by the control device for a vehicle according to the embodiment;
FIG. 3 is a flow chart that shows shift control process executed by the control device for a vehicle according to the embodiment;
FIG. 4 is a time chart that shows shift control operations executed by an existing control device for a vehicle;
FIG. 5 is a time chart that shows shift control operations executed by the control device for a vehicle according to the embodiment; and
FIG. 6 is a time chart that shows shift control operations executed by the control device for a vehicle according to the embodiment.

### DETAILED DESCRIPTION OF EMBODIMENTS

Hereinafter, a control device for a vehicle according to an embodiment of the invention will be described in detail with reference to the accompanying drawings. Note that the embodiment does not limit the aspect of the invention and, when there are a plurality of embodiments, the aspect of the invention also encompasses combination of any two or more of the embodiments.

### Embodiment

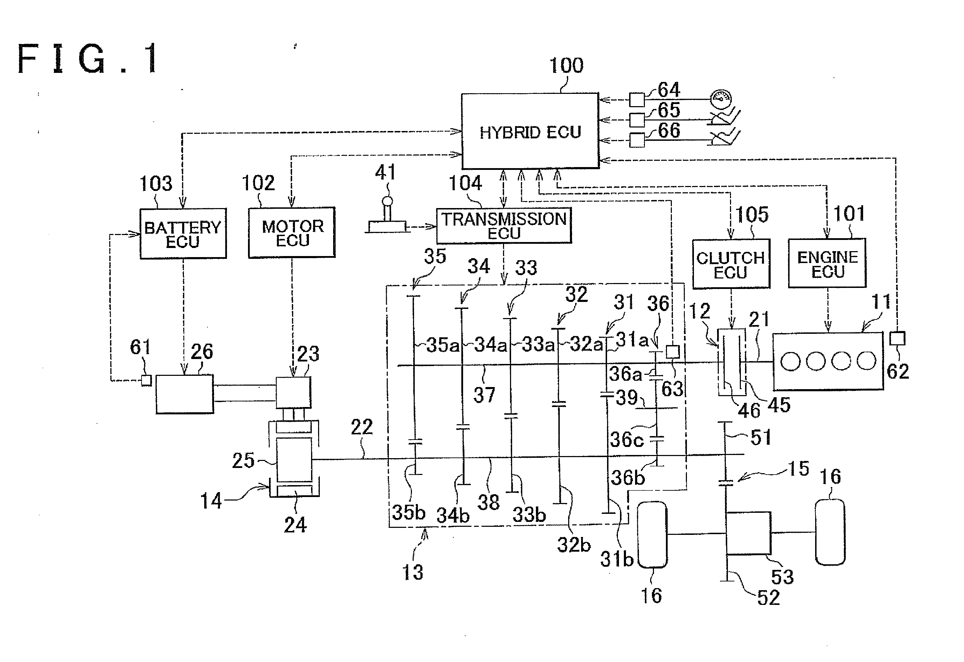

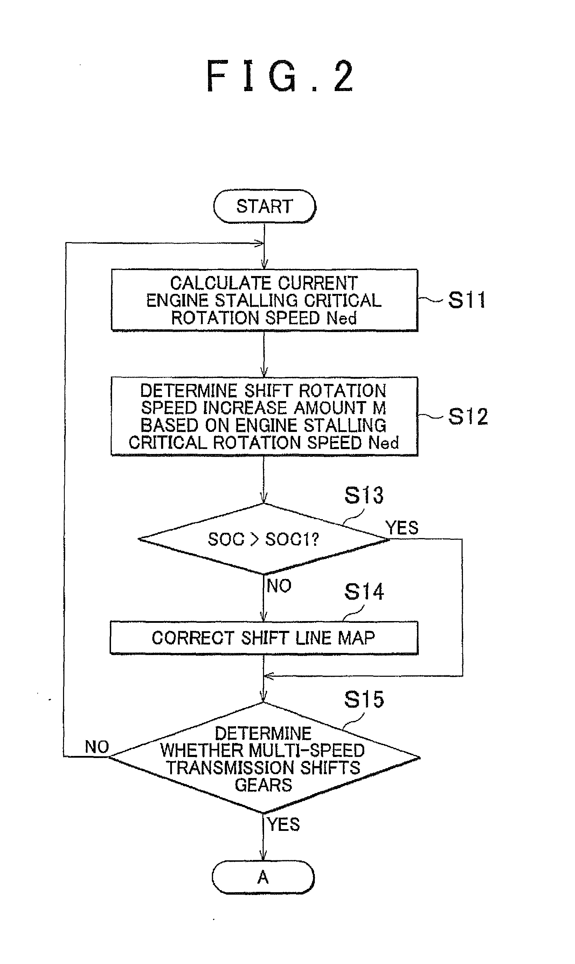

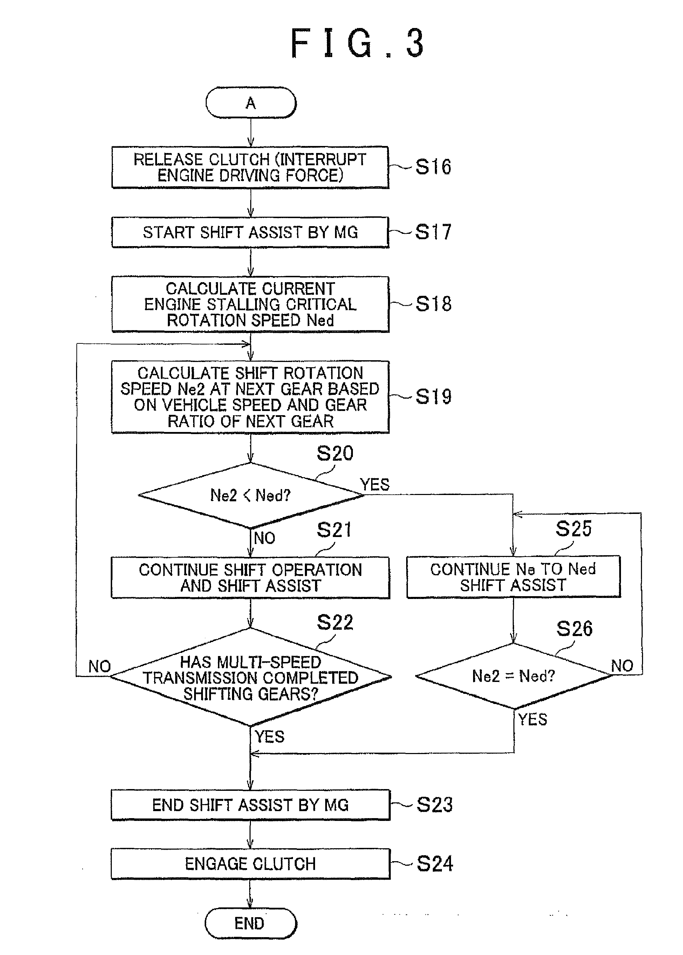

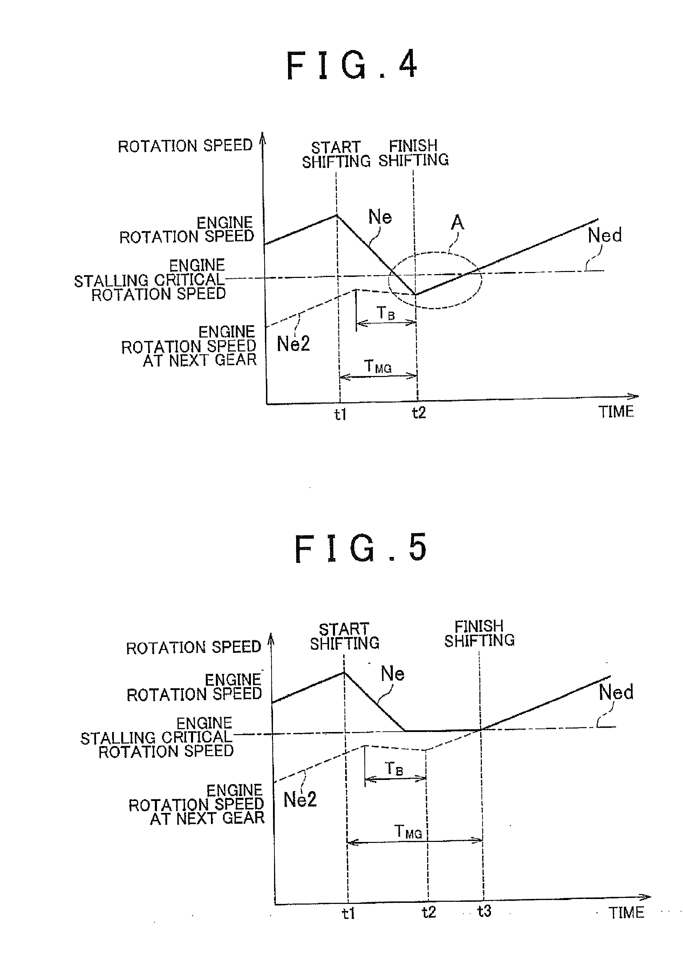

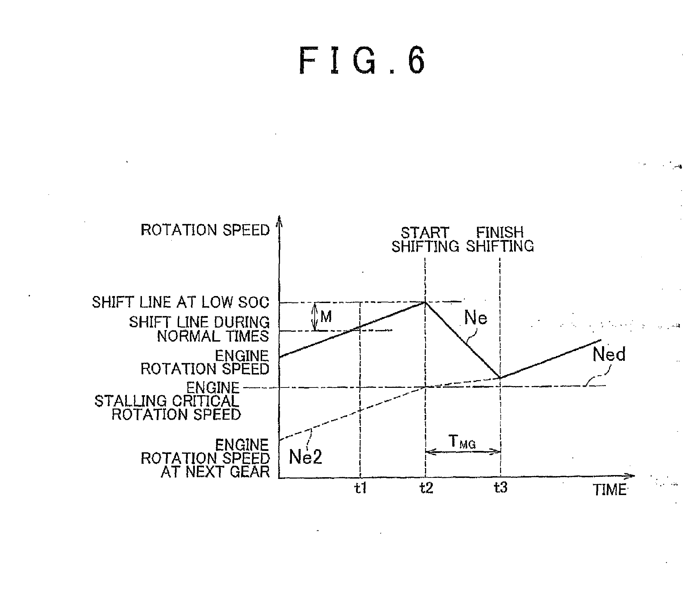

FIG. 1 is a schematic configuration diagram that shows a control device for a vehicle according to the embodiment of the invention. FIG. 2 and FIG. 3 are flow charts that show shift control process executed by the control device for a vehicle according to the embodiment. FIG. 4 is a time chart that shows shift control operations executed by an existing control device for a vehicle. FIG. 5 and FIG. 6 are time charts that show shift control operations executed by the control device for a vehicle according to the embodiment.

As shown in FIG. 1, a hybrid vehicle according to the present embodiment includes an engine (internal combustion engine) 11 that serves as a power source, an automatic clutch 12, an automatic multi-speed transmission 13, a motor generator (electric motor) 14 that serves as a power source, a final reduction gear 15 and drive wheels 16.

The engine 11 is an internal combustion engine serving as a heat engine that combusts fuel in combustion chambers and that converts generated thermal energy to mechanical energy. The engine 11 uses gasoline as fuel. The engine 11 is able to output mechanical power from an output shaft (crankshaft) 21 through reciprocal motion of pistons. The engine 11 includes fuel injection device(s) and ignition devices. The operations of the fuel injection device(s) and ignition devices are controlled by an engine electronic control unit 101 (hereinafter, referred to as engine ECU). The engine ECU 101 controls the fuel injection amount, fuel ignition timing, and the like, of the fuel injection device(s) and controls the ignition timings of the ignition devices to thereby make it possible to adjust mechanical power (engine output torque) output from the output shaft 21 of the engine 11.

The engine ECU 101 is formed of a central processing unit (CPU), a read only memory (ROM), a random access memory (RAM), a backup RAM, and the like. The ROM prestores predetermined control programs, and the like. The RAM temporarily stores computation results of the CPU. The backup RAM stores prepared information, and the like.

The motor generator 14 has the function of a motor (electric motor) that converts supplied electric power to mechanical power (motor output torque) to output the mechanical power from the output shaft 22 and the function of a generator (power generator) that converts mechanical power, input to the output shaft 22, to electric power to recover the electric power. The motor generator 14 is, for example, formed as a permanent magnet AC synchronous moor. The motor generator 14 includes a stator 24 and a rotor 25. The stator 24 forms revolving magnetic fields with three-phase alternating-current power supplied from an inverter 23. The rotor 25 is attracted by the revolving magnetic fields to rotate. The rotor 25 rotates integrally with the output shaft 22. In addition, the motor generator 14 is provided with a rotation sensor (resolver) that detects the rotation angular position of the rotor 25. The rotation sensor transmits a detected signal to a motor generator electronic control unit (hereinafter, referred to as motor ECU) 102. The motor ECU 102 is formed of a CPU, a ROM, a RAM, a backup RAM, and the like. The ROM prestores predetermined control programs, and the like. The RAM temporarily stores computation results of the CPU. The backup RAM stores prepared information, and the like.

In addition, the output shaft 22 of the motor generator 14 is coupled to the output shaft 38 of the multi-speed transmission 13. Then, when the motor generator 14 functions as the motor, the motor generator 14 transmits motor output torque to the output shaft 38 of the multi-speed transmission 13; whereas, when the motor generator 14 functions as a generator, mechanical power from the output shaft 38 of the multi-speed transmission 13 is input to the output shaft 22 of the motor generator 14.

The motor generator 14 is connected to a battery (secondary battery) 26 via the inverter 23. Direct-current power from the battery 26 is converted to alternating-current power by the inverter 23, and is then supplied to the motor generator 14. The motor generator 14 supplied with the altemating-eurrent power operates as the motor to output motor output torque from the output shaft 22. On the other hand, when the motor generator 14 is operated as the generator, alternating-current power from the motor generator 14 may be converted to direct-current power by the inverter 23 to recover the direct-current power by the battery 26 or braking force (regenerative braking) may be added to the drive wheels 16 while electric power is regenerated. In this case, mechanical power (output torque) output from the multi-speed transmission 13 is input to the rotor 25 via the output shaft 22, and the motor generator 14 converts the input torque to alternating-current power. The operation of the inverter 23 is controlled by the motor ECU 102.

A battery electronic control unit (hereinafter, referred to as battery ECU) 103 is connected to the battery 26. The battery ECU 103 manages the state of charge (SOC), and the like, of the battery 26. The battery ECU 103 is provided with an SOC sensor 61 that detects the state of charge, that is, the state of charge level (SOC level), of the battery 26. The battery ECU 103 receives a signal associated with the state of charge level (SOC level) of the battery 26, detected by the SOC.sensor 61. Then, the battery ECU 103 determines the state of charge of the battery 26 on the basis of the received signal, and determines whether to charge and whether to discharge the battery 26.

The multi-speed transmission 13 uses the power (engine output torque) of the engine 11 and/or the power (motor output torque) of the motor generator 14 as driving force, and transmits the driving force to the right and left drive wheels 16 via the final reduction gear 15.

The automatic multi-speed transmission 13 has a forward five-speed gears and a reverse one-speed gear. The forward speed gears include a first-speed gear 31, a second-speed gear 32, a third-speed gear 33, a fourth-speed gear 34 and a fifth-speed gear 35. The reverse speed gear includes a reverse gear 36. The forward speed gears are configured such that the speed ratio reduces in order of the first-speed gear 31, the second-speed gear 32, the third-speed gear 33, the fourth-speed gear 34 and the fifth-speed gear 35. In addition, the multi-speed transmission 13 includes an input shaft 37 and the output shaft 38. The engine output torque of the engine 11 is transmitted to the input shaft 37. The output shaft 38 is arranged in parallel with the input shaft 37 with a space. Note that the configuration of the multi-speed transmission 13 is simply described and the number and arrangement of the gears are not limited to the configuration shown in FIG. 1.

Here, the first-speed gear 31 is formed of a first-speed drive gear 31a and a first-speed driven gear 31b that are in mesh with each other. The first-speed drive gear 31a is arranged on the input shaft 37, and the first-speed driven gear 31b is arranged on the output shaft 38. The second-speed gear 32 is formed of a second-speed drive gear 32a and a second-speed driven gear 32b that are in mesh with each other. The second-speed drive gear 32a is arranged on the input shaft 37, and the second-speed driven gear 32b is arranged on the output shaft 38. The third-speed gear 33 is formed of a third-speed drive gear 33a and a third-speed driven gear 33b that are in mesh with each other. The third-speed drive gear 33a is arranged on the input shaft 37, and the third-speed driven gear 33b is arranged on the output shaft 38. The fourth-speed gear 34 is formed of a fourth-speed drive gear 34a and a fourth-speed driven gear 34b that are in mesh with each other. The fourth-speed drive gear 34a is arranged on the input shaft 37, and the fourth-speed driven gear 34b is arranged on the output shaft 38. The fifth-speed gear 35 is formed of a fifth-speed drive gear 35a and a fifth-speed driven gear 35b that are in mesh with each other. The fifth-speed drive gear 35a is arranged on the input shaft 37, and the fifth-speed driven gear 35b is arranged on the output shaft 38.

The reverse gear 36 is formed of a reverse drive gear 36a, a reverse driven gear 36b and a reverse intermediate gear 36c. The reverse drive gear 36a is arranged on the input shaft 37, and the reverse driven gear 36b is arranged on the output shaft 38. The reverse intermediate gear 36c is in mesh with the reverse drive gear 36a and the reverse driven gear 36b, and is arranged on a rotary shaft 39.

Note that, in the configuration of the actual multi-speed transmission 13, any one of the drive gears of the respective gears is arranged so as to rotate integrally with the input shaft 37, while the remaining drive gears are arranged so as to relatively rotate with respect to the input shaft 37. In addition, any one of the driven gears of the respective gears is arranged so as to rotate integrally with the output shaft 38, while the remaining driven gears are arranged so as to relatively rotate with respect to the output shaft 38.

In addition, in this embodiment, the multi-speed transmission 13 is employed as the transmission; instead, a belt-type or toroidal-type continuously variable transmission may also be employed as the transmission. In addition, the motor generator 14 is constantly coupled to the output shaft 38 of the transmission 13. However, the aspect of the invention is not limited to such a structure. The motor generator 14 and the output shaft 38 of the transmission 13 may be configured such that the motor generator 14 and the output shaft 38 are engageable with or releasable from (transmission is shut off) each other by a clutch. Alternatively, the motor generator 14 and the input shaft 37 of the transmission 13 may be configure such that the motor generator 14 and the input shaft 37 are directly coupled to each other or may be configured such that the motor generator 14 and the input shaft 37 are engageable with or releasable from each other by a clutch.

The multi-speed transmission 13 is controlled by a transmission electronic control unit (hereinafter, referred to as transmission ECU) 104. A shift operating device 41 is connected to the transmission ECU 104. Therefore, an operation signal that indicates that the shift operating device 41 is operated by a driver is input to the transmission ECU 104, and the transmission ECU 104 uses a hydraulic device (hydraulic actuator) (not shown) to shift the gear of the multi-speed transmission 13. Note that, in the present embodiment, the hydraulic actuator is used as the hydraulic device; however, the hydraulic device is not specifically limited to this configuration. For example, an electric actuator may be used instead.

In this case, the input shaft 37 and output shaft 38 of the multi-speed transmission 13 each has a sleeve that moves in the axial direction with hydraulic pressure by the transmission ECU 104. The sleeves move in the axial direction to thereby cause the relatively rotatable drive gear and driven gear, located in the respective moved directions, to integrally rotate with the input shaft 37 and the output shaft 38. The multi-speed transmission 13 is able to shift into a gear or shift into a neutral position as the sleeves move.

The clutch 12 is interposed between the engine 11 and the multi-speed transmission 13. The clutch 12 is able to change between an engaged state where power may be transmitted between the output shaft 21 of the engine 11 and the input shaft 37 of the multi-speed transmission 13 and a released state where transmission of power may be shut off. The clutch 12 is a dry-type or wet-type single-plate clutch or multi-plate clutch, and has a disc-shaped friction plate or disc-shaped friction plates. The clutch 12 uses the friction force of the friction plate(s) to make it possible to transmit the engine output torque of the engine 11 from the output shaft 21 to the input shaft 37 of the multi-speed transmission 13. The clutch 12 has an input-side rotating portion 45 coupled to the output shaft 21 and an output-side rotating portion 46 coupled to the input shaft 37. Then, the clutch 12 is controlled by a clutch electronic control unit (hereinafter, referred to as clutch ECU) 105. The clutch ECU 105 is able to change the operating state of the clutch 12 (engage or release the clutch 12) using a hydraulic device (hydraulic actuator) (not shown) on the basis of the operating state of the vehicle.

The final reduction gear 15 reduces the speed of input torque input from the output shaft 38 af the multi-speed transmission 13, and then distributes the torque to the right and left drive wheel 16. The final reduction gear 15 includes a pinion gear 51, a ring gear 52 and a differential mechanism 53. The pinion gear 51 is fixed to an end of the output shaft 38. The ring gear 52 is in mesh with the pinion gear 51, and reduces the speed of rotation torque while converting the rotation direction to an orthogonal direction. The differential mechanism 53 distributes the rotation torque, input via the ring gear 52, to the right and left drive wheels 16.

Furthermore, the hybrid vehicle is provided with an electronic control unit (hereinafter, referred to as hybrid ECU) 100 that comprehensively controls the operations of the vehicle overall. The hybrid ECU 100 is formed of a CPU, a ROM, a RAM, a backup RAM, and the like. The ROM prestores predetermined control programs, and the like. The RAM temporarily stores computation results of the CPU. The backup RAM stores prepared information, and the like. The hybrid ECU 100 is able to exchange information, such as signals detected by various sensors and control commands, with the engine ECU 101, the motor ECU 102, the battery ECU 103, the transmission ECU 104 and the clutch ECUM 105.

Then, the drive mode of the hybrid ECU 100 includes at least an engine drive mode, a motor drive mode and a hybrid drive mode. The hybrid ECU 100 is able to set any one of the modes on the basis of driver's operation of the shift operating device 41 and the running state of the hybrid vehicle.

An engine rotation speed sensor 62, an input rotation speed sensor 63, a vehicle speed sensor 64, an accelerator operation amount sensor 65 and a brake pedal sensor 66 are connected to the hybrid ECU 100. The engine rotation speed sensor 62 detects the rotation speed (engine rotation speed) Ne of the output shaft 21 of the engine 11. The input rotation speed sensor 63 detects the rotation speed (input rotation speed) Nin of the input shaft 37 of the transmission 13. The vehicle speed sensor 64 detects the vehicle speed. The accelerator operation amount sensor 65 detects the accelerator operation amount θ. The brake pedal sensor 66 detects whether a brake pedal is depressed. Note that, in the present embodiment, the brake pedal sensor 66 is used to detect whether the brake pedal is depressed; however, the aspect of the invention is not specifically limited to this configuration. For example, a brake stroke sensor that detects the operation amount of the brake pedal or a brake depression force sensor that detects the brake depression force may be used instead. The hybrid ECU 100 is able to execute drive control over the engine 11, the clutch 12, the multi-speed transmission 13, the motor generator 14 and the battery 26 using the ECUs 101 to 105 on the basis of the signals output from the sensors 61 to 66. The hybrid ECU 100 is able to implement various controls.

In the engine drive mode, the hybrid ECU 100 sets the clutch 12 in the engaged state to drive the engine 11. Then, the engine 11 generates driving torque, and the driving torque is transmitted to the multi-speed transmission 13 via the clutch 12.. After that, the driving torque is shifted in speed by the multi-speed transmission 13, reduced in speed by the final reduction gear 15, and then distributed to the right and left drive wheels 16.

On the other hand, in the motor drive mode, the hybrid ECU 100 sets the clutch 12 in the released state to decouple the engine 11 from the multi-speed transmission 13, and drives the motor generator 14. Then, the motor generator 14 generates driving torque, and the driving torque is transmitted to the final reduction gear 15 via the output shaft 38 of the multi-speed transmission 13, reduced in speed by the final reduction gear 15 and then distributed to the right and left drive wheels 16.

In addition, in the hybrid drive mode, the hybrid ECU 100 sets the clutch 12 in the engaged state to drive the engine 11 and also drives the motor generator 14. Then, the driving torque of the engine 11 is transmitted to the multi-speed transmission 13 via the clutch 12, and is shifted in speed by the multi-speed transmission 13. On the other hand, the driving torque of the motor generator 14 is transmitted to the output shaft 38 of the multi-speed transmission 13. Then, the driving torque of the engine 11 and the driving torque of the motor generator 14 are reduced in speed by the final reduction gear 15 and distributed to the right and left drive wheels 16.

Then, in the hybrid drive mode, the hybrid ECU 100 is able to implement economy running control in which the engine 11 is temporarily stopped. When the hybrid vehicle does not require driving torque, for example, when the hybrid vehicle is decelerating or when the hybrid vehicle is coasting, the hybrid ECU 100 is able to set the clutch 12 in the released state to stop the engine 11. By stopping the engine 11 in the hybrid drive mode, it is possible to improve fuel economy. In addition, at this time, the motor generator 14 may be used as a power generator to perform regenerative running or may stop the motor generator 14.

The thus configured control device for a vehicle according to the present embodiment includes shift line correcting means, motor assist means and shift control means. The shift line correcting means corrects an intended shift line of the multi-speed transmission 13 toward a higher rotation speed when the state of charge level of the battery 26 is lower than a predetermined value set in advance. The motor assist means causes the motor generator 14 to assist the engine 11 such that the rotation speed off the engine 11 is not lower than a self-sustaining rotation speed at the time when the multi-speed transmission 13 shifts gears. The shift control means executes shift control using the shift line corrected by the shift line correcting means when the motor assist means operates.

Here, the transmission ECU 104 functions as the shift line correcting means and the shift control means, and the motor ECU 102 functions as the motor assist means; however, because the hybrid ECU 100 exchanges various signals with the ECUs . 101 to 105, it may be regarded that the hybrid ECU 100 functions as the shift line correcting means, the motor assist means and the shift control means.

Then, the transmission ECU 104 that serves as the shift line correcting means obtains a critical rotation speed on the basis of the load and current rotation speed of the engine 11 and the state of charge level of the battery 26, and sets the correction amount of the intended shift line on the basis of the critical rotation speed.

In addition, when a shift command is input to the hybrid ECU 100, the hybrid ECU 100 causes the ECUs 102, 104 and 105 as follows, The clutch ECU 105 releases the clutch 12 to shut off torque transmission between the engine 11 and the multi-speed transmission 13. The motor ECU 102 operates the motor generator 14 to assist the engine 11. The transmission ECU 104 shifts gears using the intended shift line. The transmission ECU 104 determines that the mulfii-speed transmission 13 has completed shifting gears when the current rotation speed of the engine 11 becomes equal to the critical rotation speed, and then stops its operation. The clutch ECU 105 connects the clutch 12 to allow torque transmission between the engine 11 and the multi-speed transmission 13. The motor ECU 102 stops the operation of the motor generator 14.

Here, the process of shift control over the multi-speed transmission 13, executed by the control device for a vehicle according to the present embodiment, will be described in detail with reference to the flow charts shown in FIG. 2 and FIG. 3.

Generally, while a hybrid vehicle is running, shift control over the multi-speed transmission 13 may be executed in response to a shift request. At this time, the motor generator 14 needs to be used to assist the engine 11 in generating the driving force of the hybrid vehicle on the basis of a driving force required by a driver such that the rotation speed of the engine 11 does not decrease to cause a stop of the engine 11 (does not cause engine stalling).

In shift control over the multi-speed transmission 13, executed by the control device for a vehicle according to the present embodiment, as shown in FIG. 2, in step S11, the hybrid ECU 100 calculates an engine stalling critical rotation speed Ned of the engine 11 for the currently running hybrid vehicle. The engine stalling critical rotation speed Ned is a lower limit rotation speed at which the engine 11 is not stopped by a load that occurs when the multi-speed transmission 13 upshifts by one gear from a current gear (speed ratio). The hybrid ECU 100 obtains the engine stalling critical rotation speed Ned on the basis of the current rotation speed of the engine 11, the current gear of the multi-speed transmission 13 and the state of charge level of the battery 26. Here, the current rotation speed of the engine 11 is detected by the engine rotation speed sensor 62. A command value from the transmission ECU 104 or a value detected by a shift position sensor (not shown) provided on the multi-speed transmission 13 is used as the current gear of the multi-speed transmission 13. The state of charge level of the battery 26 is detected by the SOC sensor 61.

In step S12, the hybrid ECU 100 sets the correction amount of the intended shift line of the multi-speed transmission 13, that is, a shift rotation speed increase amount M, on the basis of the engine stalling critical rotation speed Ned. The transmission ECU 104 sets shift engine rotation speeds at the time when the multi-speed transmission 13 upshifts and shift engine rotation speeds at the time when multi-speed transmission 13 downshifts as shift lines, and stores these shift lines as a map. The shift line map does not take the critical rotation speed Ned of the engine 11 into consideration, so, when a large load acts on the engine 11 and the rotation speed of the engine 11 decreases, engine stalling may occur. Therefore, in the current running state of the hybrid vehicle, the shift rotation speed increase amount M for the multi-speed transmission 13 is set on the basis of the current engine stalling critical rotation speed Ned of the engine 11.

In step S13, the battery ECU 103 determines whether the current state of charge level SOC of the battery 26 detected by the SOC sensor 61 is higher than a predetermined state of charge level SOC1 set in advance. The predetermined state of charge level SOC1 is a lower limit at or below which it is difficult for the battery ECU 103 to drive the motor generator 14 to cause the hybrid vehicle to run along with a driver's request with the current state of charge level SOC stored in the battery 26.

Here, when it is determined that the current state of charge level SOC of the battery 26 is lower than or equal to the predetermined state of charge level SOC1 (No), the shift rotation speed increase amount M for the multi-speed transmission 13, set on the basis of the current engine stalling critical rotation speed Ned of the engine 11, is used to correct the shift line map in step S14, and then the process proceeds to step S15. On the other hand, when it is determined that the current state of charge level SOC of the battery 26 is higher than the predetermined state of charge level SOC1 (Yes), the process proceeds to step S15 without correcting the shift line map.

: In step S15, it is determined whether a shift command is input to the transmission ECU 104 to cause the multi-speed transmission 13 to shift gears. Here, when it is determined that the shift command is input to the transmission ECU 104 (Yes), the process proceeds to step S16; whereas, when it is determined that no shift command is input to the transmission ECU 104 (No), the process returns to step S11

When the multi-speed transmission 13 shifts gears, as shown in FIG. 3, the clutch ECU 105 releases the clutch 12 to shut off torque transmission between the engine 11 and the multi-speed transmission 13 in step S16. Then, in step S17, the motor ECU 102 drives the motor generator 14 to start assisting the engine 11 ("shift assist") with driving force at the time when the multi-speed transmission 13 shifts gears. In step S18, the hybrid ECU 100 calculates the current engine stalling critical rotation speed Ned of the engine 11. A method of calculating the engine stalling critical rotation speed Ned is similar to that of the above described step S11. In step S19, the hybrid ECU 100, calculates a shift rotation speed Ne2 at the next gear of the multi-speed transmission 13 on the basis of the current vehicle speed of the hybrid vehicle and the speed ratio (gear ratio) of the next gear of the multi-speed transmission 13.

Then, in step S20, the hybrid ECU 100 determines whether the shift rotation speed Ne2 is lower than the engine stalling critical rotation speed Ned. Here, when it is determined that the shift rotation speed Ne2 is higher than or equal to the engine stalling critical rotation speed Ned (No), the transmission ECU 104 drives the multi-speed transmission 13 to shift gears in step S21, and the motor ECU 102 drives the motor generator 14 to assist the engine 11, that is, controls the motor generator 14 such that a driving force required by the driver may be ensured. Then, in step S22, the hybrid ECU 100 determines whether the transmission ECU 104 has completed shift control over the multi-speed transmission 13. Here, when it is determined that the multi-speed transmission 13 has not completed shifting gears (No), the process returns to step S19 and repeats the process. On the other hand, when it is determined that the multi-speed transmission 13 has completed shifting gears (Yes), the process proceeds to step S23.

When it is determined in step S20 that the shift rotation speed Ne2 is lower than the engine stalling critical rotation speed Ned (Yes), the engine ECU 101 in step S25 keeps the current rotation speed Ne at the engine stalling critical rotation speed Ned such that the current rotation speed Ne is not lower than the engine stalling critical rotation speed Ned, the transmission ECU 104 drives the multi-speed transmission 13 to shift gears, and the motor ECU 102 drives the motor generator 14 to assist the engine 11. Then, in step S26, it is determined whether the shift rotation speed Ne2 has reached the engine stalling critical rotation speed Ned. Here, when it is determined that the shift rotation speed Ne2 has not reached the engine stalling critical rotation speed Ned (No), the process returns to step S25 and repeats the process; whereas, when it is determined that the shift rotation speed Ne2 has reached the engine stalling critical rotation speed Ned (Yes), the process proceeds to step S23.

In step S23, the motor ECU 102 stops driving the motor generator 14 to end assisting the engine 11. Then, in step S24, the clutch ECU 105 connects the clutch 12 to allow torque transmission between the engine 11 and the motor generator 14.

In addition, here, the shift control operations executed by the control device for a vehicle according to the present embodiment, will be described in detail with reference to the time charts shown in FIG. 4 to FIG. 6.

As shown in FIG. 4 and FIG. 5, when the multi-speed transmission 13 shifts gears, the rotation speed Ne of the engine 11 increases, and the engine rotation speed (shift rotation speed) Ne2, at which the clutch 12 may be connected at the next gear, increases. At time t1, the multi-speed transmission 13 starts shifting gears, and, when the clutch 12 is released, torque transmission between the engine 11 and the multi-speed transmission 13 is shut off, so the current rotation speed Ne of the engine 11 decreases to approach the engine stalling critical rotation speed Ned. In the related art, as shown in FIG. 4, the engine stalling critical rotation speed Ned is not taken into consideration, so the current rotation speed Ne of the engine 11 becomes lower than the engine stalling critical rotation speed Ned. Then, at time t2, the current rotation speed Ne of the engine 11 becomes equal to the shift rotation speed Ne2, and the multi-speed transmission 13 completes shifting gears. Therefore, engine stalling may occur in the region A in FIG. 4, in which the current rotation speed Ne of the engine 11 is lower than the engine stalling critical rotation speed Ned.

On the other hand, in the present embodiment, as shown in FIG. 5, the engine stalling critical rotation speed Ned is taken into consideration (steps S20 and S21 in FIG. 3), so even when the current rotation speed Ne of the engine 11 decreases, the rotation speed Ne is kept at the engine stalling critical rotation speed Ned. Then, at time t3, the current rotation speed Ne of the engine 11 (engine stalling critical rotation speed Ned) becomes equal to the shift rotation speed Ne2, and the multi-speed transmission 13 completes shifting gears. Therefore, because the current rotation speed Ne of the engine 11 does not become lower than the engine stalling critical rotation speed Ned, engine stalling does not occur. Note that a period TB is a period during which the shift rotation speed Ne2 has decreased because of driver's braking, and an assist period TMG during which the motor generator 14 assists the engine 11 is longer than that of the related art, but occurrence of engine stalling may be prevented.

In addition, in the present embodiment, as shown in FIG. 6, the engine stalling critical rotation speed Nerd is taken into consideration (steps S20 and S21 in FIG. 3), and the state of charge level SOC recognized by the battery ECU 103 is taken into consideration (steps S13 and S14 in FIG. 2), so, when the current state of charge level SOC of the battery 26 is lower than or equal to the predetermined state of charge level SOC1, the intended shift line of the multi-speed transmission 13, set on the basis of the engine stalling critical rotation speed Ned, is corrected toward a higher rotation speed. Then, at time t2, the multi-speed transmission 13 starts shifting gears, and, when the clutch 12 is released, torque transmission between the engine 11 and the multi-speed transmission 13 is shut off, so the current rotation speed Ne of the engine 11 decreases to approach the engine stalling critical rotation speed Ned. However, because the intended shift line is corrected toward a higher rotation speed, a decrease in the current rotation speed Ne of the engine 11 is delayed, and, at time t3, the current rotation speed Ne of the engine 11 becomes equal to the shift rotation speed Ne2 before the current rotation speed Ne of the engine 11 becomes lower than the engine stalling critical rotation speed Ned, and the multi-speed transmission 13 completes shifting gears. Therefore, the current rotation speed Ne of the engine 11 does not become lower than the engine stalling critical rotation speed Ned, so engine stalling does not occur. Furthermore, in this case, extension of the assist period TMG during which the motor generator 14 assists the engine 11 is suppressed, and it is possible to prevent occurrence of engine stalling,

In this way, with the control device for a vehicle according to the present embodiment, the vehicle is configured such that the clutch 12 is provided between the engine 11 and the multi-speed transmission 13, the motor generator 14 is connected to the output shaft 38 of the multi-speed transmission 13 and the battery 26 is connected to the motor generator 14. Then, the control device corrects the intended shift line of the multi-speed transmission 13 toward a higher rotation speed when the state of charge level of the battery 26 is lower than the predetermined value set in advance, allows the motor generator 14 to assist the engine 11 such that the rotation speed of the engine 11 is not lower than a self-sustaining rotation speed of the engine 11 at the time when the multi-speed transmission 13 shift gears, and executes shift control using the corrected shift line when the motor generator 14 is driven.

Thus, when the state of charge level of the battery ECU 103 is low, the intended shift line of the multi-speed transmission 13 is corrected toward a higher rotation speed. Therefore, even when the multi-speed transmission 13 starts shifting gears and the clutch 12 is released, a decrease in the rotation speed Ne of the engine 11 is delayed, and the rotation speed Ne of the engine 11 becomes equal to the shift rotation speed Ne2 before the rotation speed Ne of the engine 11 becomes lower than the engine stalling critical rotation speed Ned, and then the multi-speed transmission 13 shift gears. Thus, it is possible to prevent occurrence of engine stalling due to a decrease in the rotation speed of the engine 11 at the time when the multi-speed transmission 13 shifts gears, and extension of the assist period during which the motor generator 14 assists the engine 11 is suppressed. Therefore, it is possible to improve fuel economy.

In addition, in the control device for a vehicle according to the present embodiment, the critical rotation speed is obtained on the basis of the rotation speed of the engine 11, the gear of the multi-speed transmission 13 and the state of charge level of the battery 26, and the correction amount of the intended shift line is set on the basis of the critical rotation speed. Thus, the correction amount of the intended shift line is based on the engine stalling critical rotation speed set on the basis of the rotation speed of the engine 11, the gear of the multi-speed transmission 13 and the state of charge level of the battery 26, so it is possible to properly prevent engine stalling at the time when the multi-speed transmission 13 shifts gears.

In addition, the control device for a vehicle according to the present embodiment releases the clutch 12 to shut off torque transmission between the engine 11 and the multi-speed transmission 13 in response to an input shift command, operates the motor generator 14 to assist the engine 11, uses an intended shift line to shift gears, determines that the multi-speed transmission 13 has completed shifting gears when the current rotation speed of the engine 11 becomes equal to the critical rotation speed and stops its operation, connects the clutch 12 to allow torque transmission between the engine 11 and the multi-speed transmission 13, and stops the operation of the motor generator 14. Thus, while a stop of the engine 11 is prevented, it is possible to efficiently execute shift control in a short period of time.

## Claims

1. A control device for a vehicle that includes: an internal combustion engine (11); a transmission (13) that is connectable to an output shaft of the internal combustion engine (11); a clutch (12) that is able to shut off torque transmission between the internal combustion engine (11) and the transmission (13); an electric motor (14) that is connectable to an output shaft of the transmission (13); and a secondary battery (26) that is able to supply electric power to the electric motor (14), **characterized by** comprising:
shift line correcting means (100 and 104) that correct a shift line of the transmission (13) toward a higher rotation speed when a state of charge of the secondary battery (26) is lower than a predetermined value set in advance;
motor assist means (100 and 102) that causes the electric motor (14) to assist the internal combustion engine (11) such that a rotation speed of the internal combustion engine (11) is not lower than a self-sustaining rotation speed of the internal combustion engine (11) at the time when the transmission (13) shifts speeds; and
shift control means (100 and 104) that executes shift control using the shift line corrected by the shift line correcting means (100 and 104) when the motor assist means (100 and 102) operates.

2. The control device according to claim 1, wherein the shift line correcting means(100 and 104) obtains a critical rotation speed on the basis of the rotation speed of the internal combustion engine (11), a speed ratio of the transmission (13) and the state of charge of the secondary battery (26), and sets a correction amount of the shift line on the basis of the critical rotation speed.

3. The control device according to claim 2, wherein the critical rotation speed is a lower limit rotation speed at which the internal combustion engine (11) is not stopped by a load that occurs when the transmission (13) upshifts by one speed from a current speed ratio.

4. The control device according to any one of claims 1 to 3, wherein:
in response to, an input shift command, the torque transmission between the internal combustion engine (11) and the transmission (13) is shut off by the clutch (12), and the motor assist means (100 and 104) and the shift control means (100 and 104) are operated; and
the shift control means (100 and 104) determines that the transmission (13) has completed shifting speeds when a current rotation speed of the internal combustion engine (11) becomes equal to the critical rotation speed, and stops its operation, the torque transmission between the internal combustion engine (11) and the transmission (13) is allowed by the clutch (12), and the motor assist means (100 and 102) stops its operation.

5. A control method for a vehicle that includes: an internal combustion engine (11); a transmission (13) that is connectable to an output shaft of the internal combustion engine (11); a clutch (12) that is able to shut off torque transmission between the internal combustion engine (11) and the transmission (13); an electric motor (14) that is connectable to an output shaft of the transmission (13); and a secondary battery (26) that is able to supply electric power to the electric motor (14), **characterized by** comprising:
correcting a shift line of the transmission (13) toward a higher rotation speed when a state of charge of the secondary battery (26) is lower than a predetermined value set in advance;
causing the electric motor (14) to assist the internal combustion engine (11) such that a rotation speed of the internal combustion engine (11) is not lower than a self-sustaining rotation speed of the internal combustion engine (11) at the time when the transmission (13) shifts speeds; and
when the electric motor (14) is caused to assist the internal combustion engine (11), executing shift control using the corrected shift line.

6. The control method according to claim 5, wherein
when the shift line of the transmission (13) is corrected toward a higher rotation speed, a critical rotation speed is obtained on the basis of the rotation speed of the internal combustion engine (11), a speed ratio of the transmission (13) and the state of charge of the secondary battery (26), and
a correction amount of the shift line is set on the basis of the critical rotation speed.

7. The control method according to claim 6, wherein the critical rotation speed is a lower limit rotation speed at which the internal combustion engine (11) is not stopped by a load that occurs when the transmission (13) upshifts by one speed from a current speed ratio.

8. The control method according to any one of claims 5 to 7, wherein:
in response to an input shift command, the torque transmission between the internal combustion engine (11) and the transmission (13) is shut off by the clutch (12), the electric motor (14) is caused to assist the internal combustion engine (11), and shift control is executed using the corrected shift line; and
when a current rotation speed of the internal combustion engine (11) becomes equal to the critical rotation speed, it is determined that the transmission (13) has completed shifting speeds and the shift control is stopped, the torque transmission between the internal combustion engine (11) and the transmission (13) is allowed by the clutch (12), and the electric motor (14) is caused to stop assisting the internal combustion engine (11).
